# NEW EUROPEAN PATENT SPECIFICATION

(11) **EP 1 751 440 B2**
(45) Date of publication and mention of the opposition decision: **13.09.2017**
(45) Mention of the grant of the patent: 09.03.2011
(21) Application number: 04733545.0
(22) Date of filing: 18.05.2004
(51) Int. Cl.: F16C 33/10, F16C 5/00

(54) **CROSSHEAD BEARING FOR A LARGE TWO-STROKE DIESEL ENGINE**
KREUZKOPFLAGER FÜR EINEN GROSSEN ZWEITAKT-DIESELMOTOR
PALIER A CROSSE POUR GROS MOTEUR DIESEL A DEUX TEMPS

(43) Date of publication of application: 14.02.2007
(73) Proprietor: MAN DIESEL & TURBO, FILIAL AF MAN DIESEL & TURBO SE, TYSKLAND, 2450 København SV (DK)
(72) Inventor: RATHMANN, Jens, DK-2820 Gentofte (DK); NØJGAARD, Niels, Henrik, Nordrup 4100 Ringsted (DK)
(74) Representative: Nordic Patent Service A/S
(86) International application number: PCT/EP2004/005313
(87) International publication number: WO 2005/111445

(56) References cited:
- EP-A- 0 199 906
- DE-A- 2 409 572
- DE-B- 2 819 936
- FR-A- 800 533
- GB-A- 380 857
- GB-A- 1 524 757
- GB-A- 2 020 783
- JP-A- H07 208 446
- US-A- 3 378 318
- US-A- 3 386 783
- US-A- 4 105 267
- US-A- 4 201 176
- US-B1- 6 640 779

## Description

The present invention relates to a crosshead for a large two-stroke diesel engine, in particular to the arrangement for providing the bearing surface of the crosshead with lubrication oil.

### BACKGROUND ART

The crosshead is a vital, heavily loaded engine component which has to be very reliable in operation. Consequently, conventional crossheads have been relatively heavy moving parts, which as such, adds dynamic loads to other engine parts.

EP 0 199 906 discloses a crosshead bearing for a large two-stroke diesel engine, which is designed to be lubricated with lubricating oil fed under pressure through a lubrication line connected to the upper part of the connecting rod. A channel inside the upper part of the connecting rod leads to feed bores in the bearing shell that open into lubrication pockets formed in the bearing surface of the shell. Lubrication pockets require a supply of lubrication oil at a relatively high pressure, i.e. about 12 Bar. However, the main lubrication supply of large two stroke diesel engines (system oil) operates at a pressure of only about 3 Bar. A dedicated high pressure lubrication supply system and pump are therefore required in addition to the general lubrication supply system when lubrication pockets are used. Both the high and the low pressure system need to be connected from stationary engine part to the crosshead via a flexible tube or the like, i.e. a flexible connection with double tubing is required. The oil pocket type of bearing is negatively dimensioned, i.e. the crosshead pin has a smaller radius than the bearing surface of the bearing shells. The resulting play allows the lubrication oil to be pressed out of the pockets by the 12 Bar supply pressure during the phase of the combustion cycle in which the bearing is low or negatively loaded. However, a negative tolerance leads to a limitation of the maximum obtainable radial extension of the effective bearing area because the crosshead journal surface and the bearing shell surface diverge and a given radial distance from the center of the effective bearing area the gap between these surfaces is too large to allow the formation of a bearing oil film. Praxis has shown that the radial extent of the effective bearing area cannot stretch for much more than 40°. Another disadvantage of using lubrication pockets is their inherent tendency to trap dirt due to areas with a low flow speed.

The MAN B&W Diesel MC series marine diesel engines use a crosshead bearing, which is designed to be lubricated with lubricating oil fed under pressure through a lubrication line connected to a central axial bore disposed within the crosshead journal. An upward radial bore leads to a supply bore in the piston rod that supplies the piston with lubrication oil for cooling the piston. A downwardly directed bore leads to a transverse slit in the journal. The transverse slit supplies the lower bearing surface with lubrication oil via axial lubrication grooves in the bearing surface of the lower bearing shell. The transverse slit meets a large bore in the lower bearing shell that connects to a longitudinally extending feed bore for supplying the crankpin bearing with lubrication oil. The central axial bore in the crosshead journal is fed with system oil at the regular 3 Bar pressure from the lubrication oil system via a single flexible tube, and no dedicated high pressure oil supply is required. The crosshead journal of this construction is positively dimensioned, i.e. the radius of the crosshead journal is larger than the radius of the bearing surface of the bearing shells. This design is also referred to as "embedded arc" because it ensures that there is a narrow gap between the bearing surface of the shell and the journal surface all around the circumference of the crosshead journal. Thus, it is possible to create a radial extent of the effective bearing area of up to 120°.

A disadvantage of the transverse slit and the large feed bore in the middle of the heaviest loaded part of the bearing is the interruption of the bearing oil film, i.e. an axially divided oil film, which leads to higher peak pressures and steeper pressure gradients.

### DISCLOSURE OF THE INVENTION

On this background, it is an object of the present invention to provide a crosshead with a large effective bearing surface in the heaviest loaded part of the bearing.

This object is achieved in accordance with claim 1 by providing a crosshead bearing for a large two-stroke engine, the bearing comprising a crosshead journal, a bearing saddle integral with a connecting rod, a lower bearing shell with a single bearing surface received in the bearing saddle, at least two axial lubrication grooves or axial lines of lubrication openings disposed in the bearing surface of

GB 1 524 757 and GB 2 020 783 disclose crosshead bearings with two separate lower bearing shells and with axial lubrication slits that are disposed in the highly loaded area of the bearing shells. The oil film pressure profile is in these constructions not one large arc but rather a collection of small arcs and therefore the maximum oil pressure at equal load will be a much higher when compared to a bearing with a single arc oil film pressure profile. the lower bearing shell or in the surface of the journal facing the lower bearing shell, a bearing cap secured to the bearing saddle, the bearing being rotatable about the crosshead journal, the journal being formed with an axial bore for communication with a supply of lubricant under and formed with a least one radial bore which meets the axial bore and extends substantially transversely thereof to the surface of the journal associated with the bearing cap, and arranged to communicate during at least some part of the pivoting movement of the connecting rod in operation, with at least one flow path extending to the axial lubrication grooves in the lower bearing shell, whereby the flow path extends from the opening of the radial bore at the surface of the journal associated with the bearing cap to the axial lubrication grooves or lines of lubrication openings substantially adjacent the bearing surface and/or substantially adjacent the rear side of either the upper or the lower bearing shell.

The bearing surface in the heaviest loaded part of the bearing is uninterrupted over a large angle. The use of lubrication grooves in the baring surface allows an embedded arc design. The combination of these two features results in a large area with a bearing oil film in the heaviest loaded part of the bearing. The low maximum pressures in the oil bearing film allow the bearing to be reduced in size and weight, which in turn results in lower dynamic loads on other engine parts, such as the small end which has a positive influence on the mean main bearing pressure of the crankshaft.

The radial bore preferably opens to a circumferential slit in the bearing cap, or in an upper bearing shell, and this slit at least partially overlaps the circumferential groove. Thus, the lubrication oil can flow from the radial bore into the circumferential groove.

The saddle can be provided with axial bores that intersect both with the circumferential groove and with another circumferential groove extending in the saddle, the circumferential groove in the saddle opens to at least two feed bores leading to the axial lubrication grooves and intersecting with a feed bore extending through the connecting rod for supplying a crankpin bearing with lubrication oil.

The above object is also achieved in accordance with claim 10 by providing a crosshead bearing for a large two-stroke engine, the bearing comprising a crosshead journal, a bearing saddle integral with a connecting rod, a lower bearing shell with a single bearing surface received in the bearing saddle, a bearing cap secured to the bearing saddle, the bearing being rotatable about a crosshead journal, and formed with an axial bore for communication with a supply of lubricant under pressure and formed with two radial bores which meet the axial bore and extend substantially transversely thereof to the surface of the journal associated with the lower bearing shell, and arranged to communicate, during at least some part of the pivoting movement of the connecting rod in operation, with two circumferentially extending rows of bores in the lower bearing shell or with two circumferential slits disposed either in the lower bearing shell or in the journal, the circumferential slits being placed outside the heaviest coaded portion of the bearing shell and intersecting with at least two axial lubrication grooves disposed in the bearing surface of the lower bearing shell or in the surface of the journal facing the lower bearing shell and said axial lubrication grooves being tangentially spaced heaviest loaded, from one another with the portion of the bearing shell there between.

The effect is substantially the same as described for the crosshead bearing according to claim 1. The bearing surface in the heaviest loaded part of the bearing is uninterrupted over a large angle. The use of lubrication grooves in the bearing surface allows an embedded arc design. The combination of these two features results in a large area with a bearing oil film in the heaviest loaded part of the bearing. The low maximum pressures in the oil bearing film allow the bearing to be reduced in size and weight, which in turn results in lower dynamic loads on other engine parts.

Preferably, a circumferential groove extending in the saddle is disposed below the circumferential slits, the circumferential groove intersects with a feed bore extending longitudinally though the connecting rod for supplying a crankpin bearing with lubrication oil.

Further objects, features, advantages and properties of the crosshead according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which:

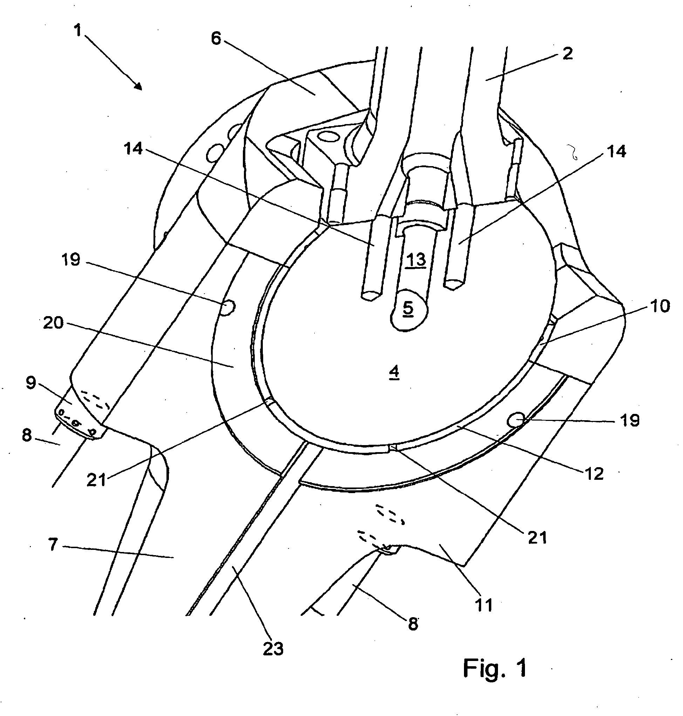

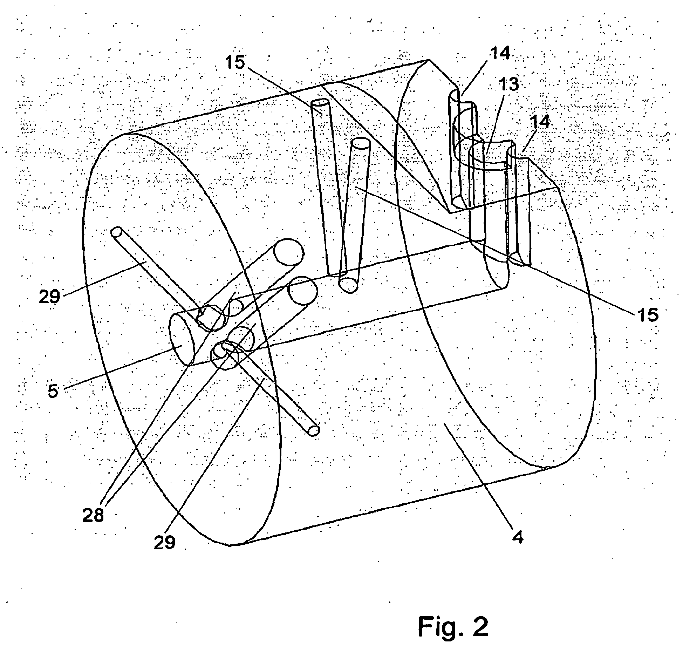

Fig. 1 is a perspective cross-sectional view on a first embodiment of the crosshead according of the invention, Fig. 2 is a transparent view of the crosshead journal of
Fig. 1 in detail and cut-away view,
Fig. 3 shows the upper and lower bearing shells in detail in a perspective cut-away view,
Fig. 4 is a cut-away view in detail of the bearing cap and the saddle,
Fig. 5 is a perspective view of the crosshead in which the crosshead journal and bearing shells are removed to illustrate grooves and a feed bore in the saddle,
Fig. 6 illustrates the traverse pressure distribution in the oil film in the crosshead bearing according to the first embodiment,
Fig. 7 illustrates the axial pressure distribution in the oil film in the crosshead bearing according to the first embodiment,
Fig. 8 illustrates the traverse pressure distribution in the oil film in a prior crosshead bearing of the type that uses oil pockets,
Fig. 9 illustrates the axial pressure distribution in the oil film in a prior crosshead bearing of the type that uses oil a traverse slit in the crosshead journal,
Fig. 10 is a perspective cross-sectional view on a second embodiment of the crosshead according of the invention, Fig. 11 is a cutaway view of the crosshead journal of

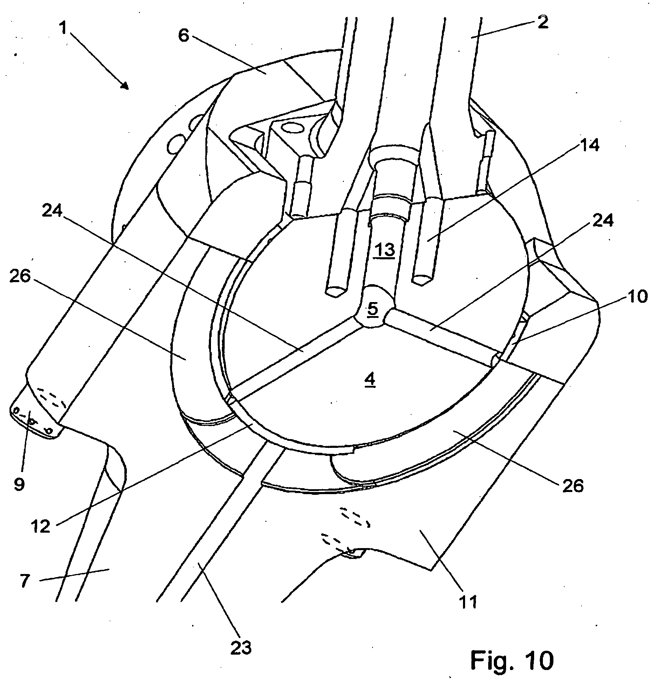

Fig. 10 in detail,

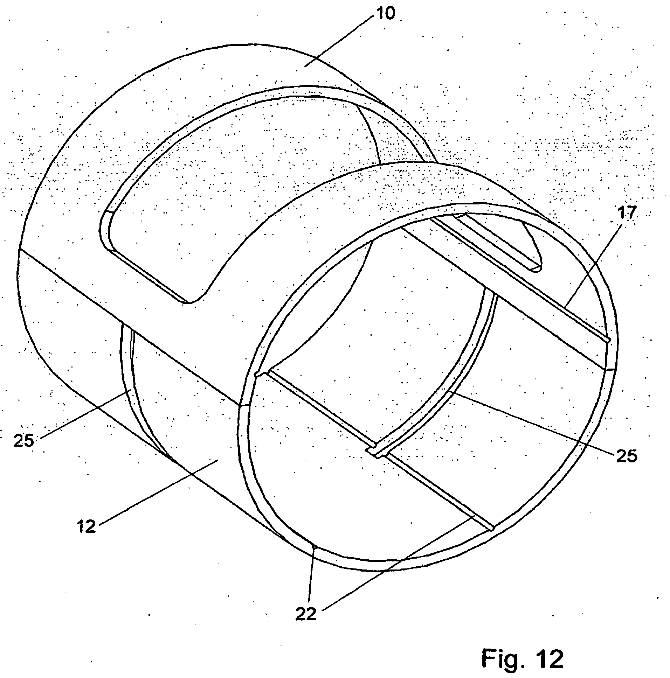

Fig. 12 is a perspective view of the upper and lower bearing shells in detail,

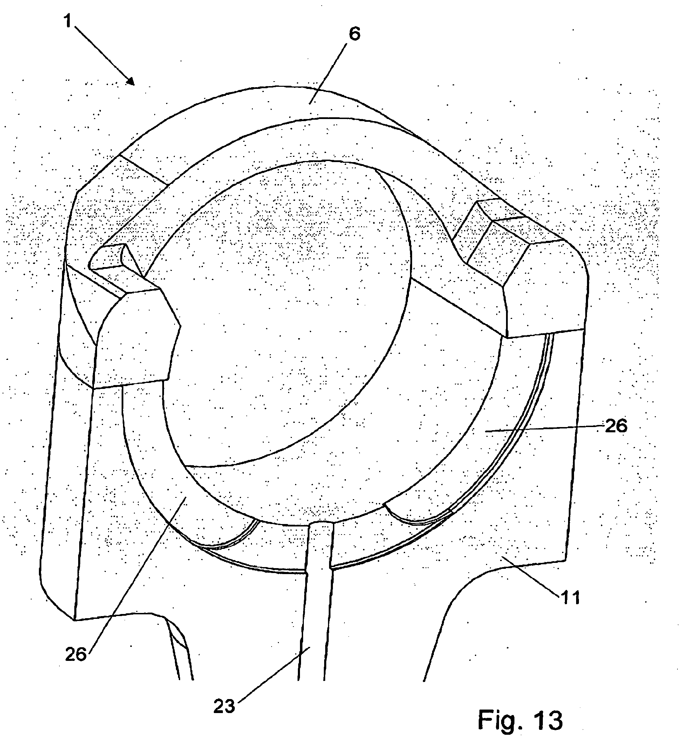

Fig. 13 is a cut-away view in detail of the bearing cap and the saddle,

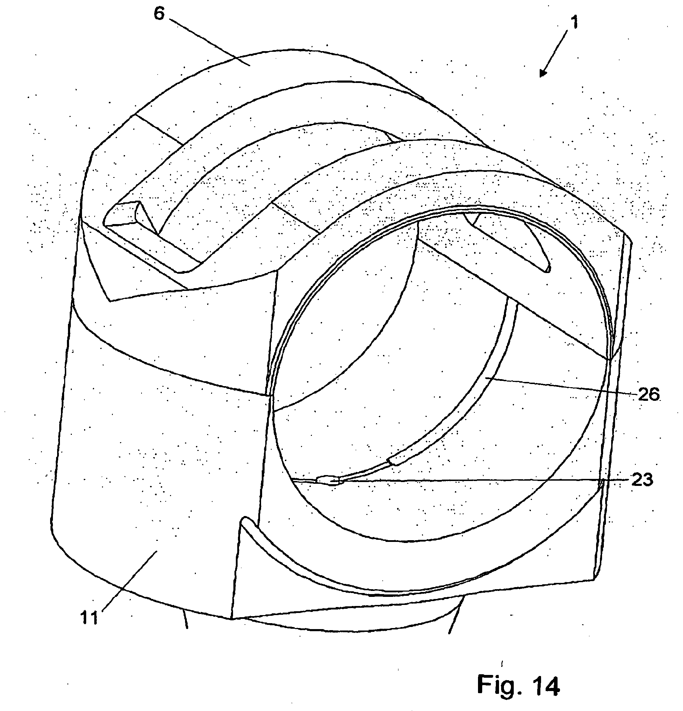

Fig. 14 is a perspective view of the crosshead in which the crosshead journal and bearing shells are removed to illustrate a groove and a feed bore in the saddle, and

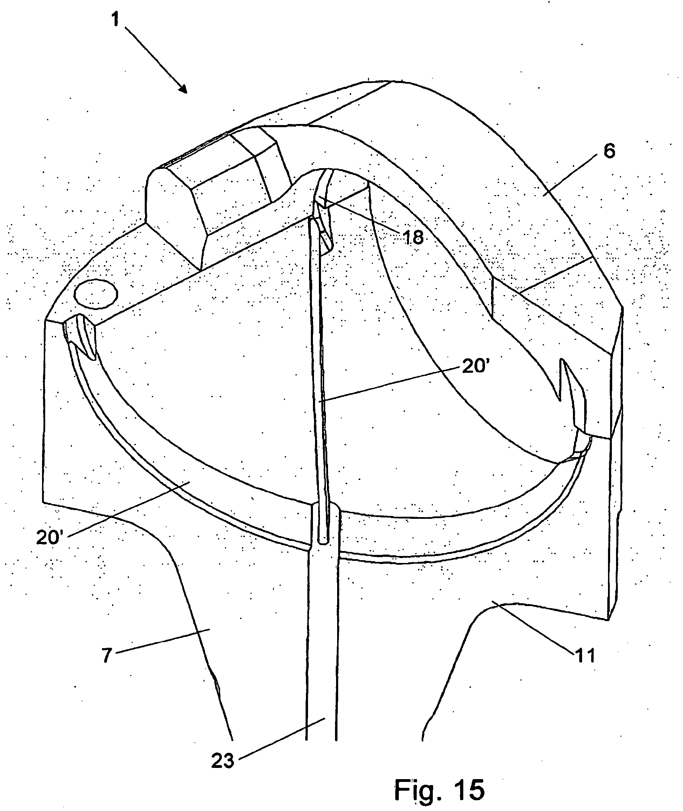

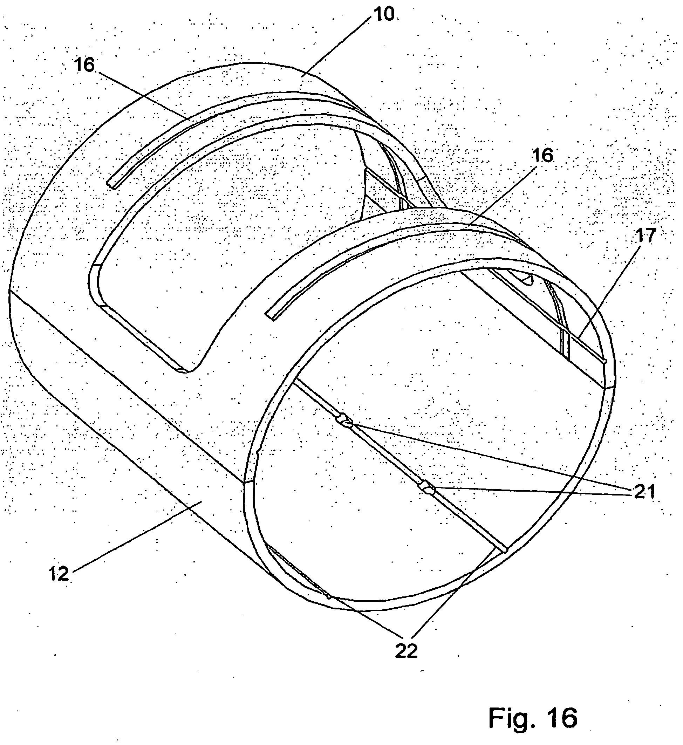

Figs. 15 and 16 illustrate a third embodiment of the invention.

### DETAILED DESCRIPTION

The crosshead bearing 1 for a large two-stroke Diesel engine according to a first embodiment is illustrated in Fig. 1. A piston rod 2 is connected with hydraulically tightened studs to a crosshead journal 4 provided with an axial bore 5 that is closed at its axial extremities. A one piece crosshead bearing cap 6, with an angular cut-out for the piston rod 2 is secured to a connecting rod 7 by studs 8 and nuts 9 which are tightened by hydraulic jacks. The bearing cap 6 is provided with a thin walled upper steel shell 10, lined on the inner bearing surface with white metal. The connecting rod 7 is provided with a one-part saddle 11 that holds a thin walled lower steel shell 12, lined on the inner bearing surface with e.g. white metal. The lower shell 12 in the saddle 11 effectively acts as a one part component, but may well be formed by two or more closely stacked parts that form a continuous bearing surface, i.e. the transitions between the parts forming the shell are tight and leveled. The saddle 11 and the bearing cap 6 form together the crosshead bearing housing. The bearing surface on the lower shell 12 cooperates with the bearing surface of the upper shell 10 to form a bearing bore in which the crosshead journal 4 is received. The bearing is positively dimensioned, i.e. the radius of the crosshead journal 4 is larger than the radius of the bearing shells to allow the surface of the journal and the bearing surface of the shells to be close enough to one another for the formation of a bearing oil film around the complete circumference of the bearing. This design is also referred to as embedded arc.

The crosshead is of forged steel and is provided with cast steel guide shoes (not shown) lined with white metal on their running surface. A telescopic tube (not shown) extends from the a system oil line (not shown) at the top of the cylinder frame down towards the crosshead down towards a bracket (not shown) for oil inlet from the telescopic pipe and mounted on one of the guide shoes.

The axial bore 5 in the journal 4 is, as shown in Fig. 2, connected via radial bores 28 and not shown grooves and bores in the crosshead to the telescopic tube and thus supplied lubrication oil at a relatively low pressure of about 3 Bar from the engines lubrication system (system oil). The connection between the lubrication system and the axial bore 5 does however not need to use a telescopic tube, it is e.g. possible to use, a hinged tube and/or a flexible tube as well known in the art. Additional radial bores 29 provide the guide shoes with lubrication oil.

The lubrication oil flows from the axial bore 5 via an upwardly directed radial bore 13 into the hollow piston rod 2 to the piston (not shown) for cooling of the latter. The oil returning from the piston through the piston rod 2 is received in two upward bores 14 that lead to the sump.

Four radial bores 15, two on each side of the upwardly directed bore 14, extend the axial bore 5 to the surface of the journal 4 associated with the bearing cap.

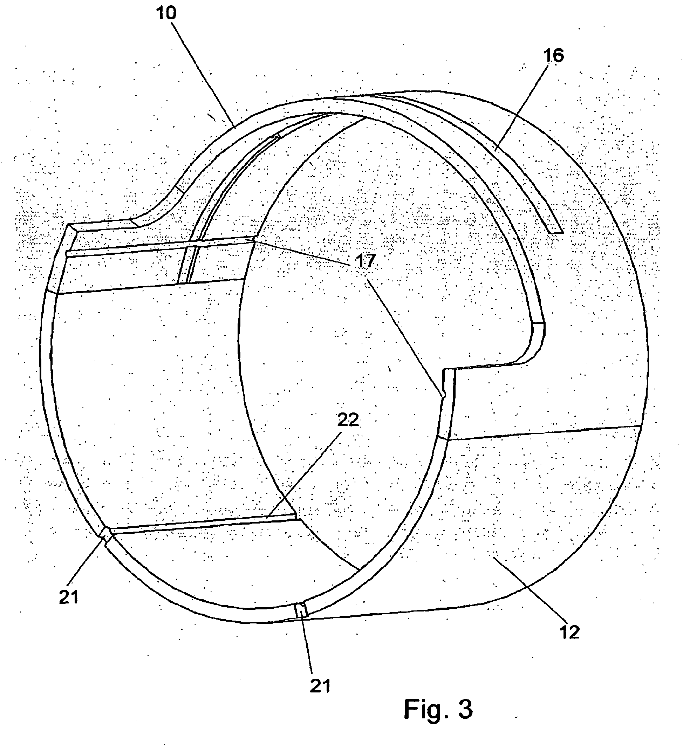

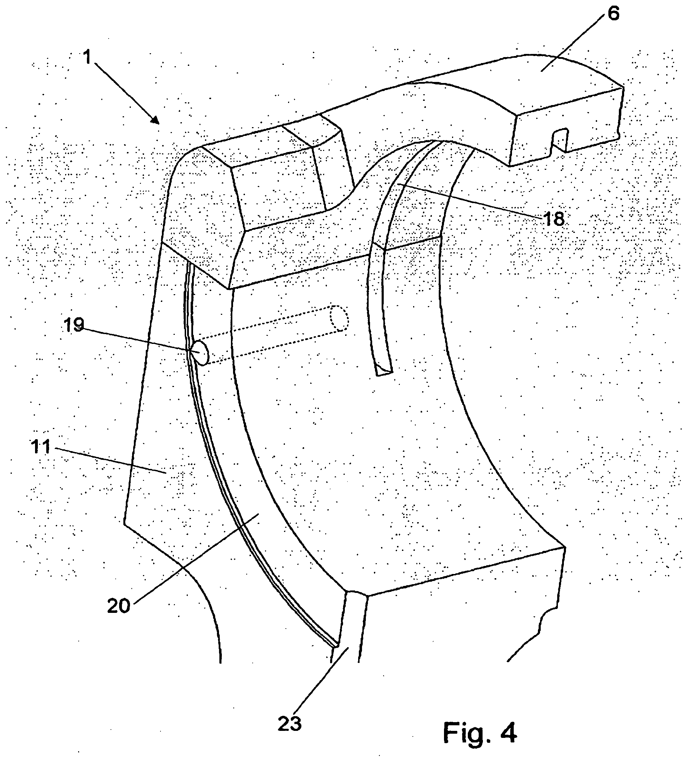

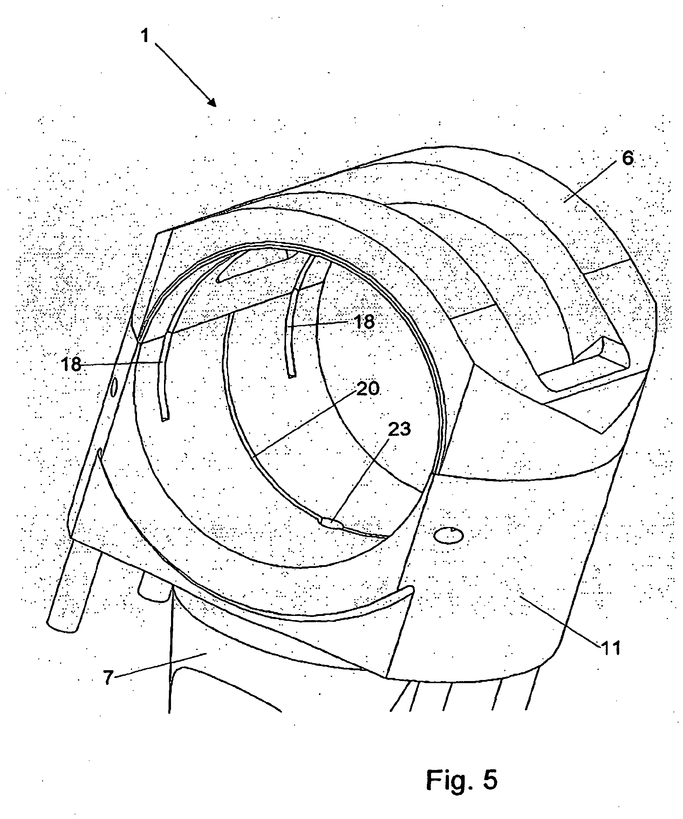

As shown in Fig. 3, two axially spaced circumferential grooves 16 in the bearing surface of upper shell 10 are disposed opposite to the openings of the radial bores 15 and receive the lubrication oil flowing out of the latter. One circumferential groove 16 is provided in the upper shell 10 on each side of the upwardly directed radial bore 13. The circumferential grooves 16 extend over the complete span of the upper shell 10. A central part of the circumferential grooves 16 is deep enough to form a throughgoing slit in the bearing shell, whilst the extremities of the circumferential grooves 16 are shallow and lead to axial lubrication grooves 17 formed in the bearing surface of the upper bearing shell 12. Two axially spaced circumferential grooves 18 disposed behind the circumferential grooves 16 are formed in the bearing cap 6 and the saddle 11 (Figs. 4 and 5). The lubrication oil flows through the central part of the circumferential grooves 16 into a respective circumferential groove 18. It is also possible to omit the upper bearing shell. The surface of the upper bearing cap acts in this case as the upper bearing surface, and the lubrication oil flows directly from the radial bores 15 into the circumferential grooves 18.

The circumferential grooves 18 span the complete bearing cap 6 and the extremities of the circumferential grooves 18 extend into the saddle 11. The extremities of the circumferential grooves 18 in the saddle 11 intersect with axial bores 19 that are embedded in the saddle 11.

The axial bores 19 connect the extremities of the two axially spaced grooves 18 to an axially central circumferential groove 20 that spans the complete saddle 11. It is also possible to locate the axial bores 19 in the bearing cap 6. The axially spaced grooves 18 will then not need to extend into the saddle 11. Instead, the axially central circumferential groove 20 will extend into the bearing cap 6 to connect with the axial bores 19. Alternatively, the bores 19 may extend at an oblique angle between the axially spaced grooves 18 and the central circumferential groove 20 to bridge some circumferential distance and thereby reduce the length of either of these grooves (not shown).

The circumferential groove 20 opens to feed bores 21 in the lower bearing shell 12 (Fig. 3) that lead to axial lubrication grooves 22 disposed in the bearing surface of the lower shell 12. Preferably, there are, as shown, two axial lubrication grooves 22, but there could be more, depending on circumstances, e.g. four. A minor part of the lubrication oil flowing from the axial bores 19 into the circumferential groove 20 enters the axial lubrication grooves 22 via the feed bores 21. Most of the oil in the lubrication grooves 22 is pressed out of its extremities and received in an oil sump (not shown). Some of the lubrication oil flowing through the axial lubrication grooves 22 is pressed out transversely and assists in forming an oil film that carries the journal 4 and prevents substantially any direct contact between the journal surface and the bearing surface of the lower shell 12 and provides lubrication.

A major part of the lubrication oil flowing from the axial bores 19 into the circumferential groove 20 does not enter the feed bores 21 but instead flows further to a large feed bore 23 that intersects with the radial groove 20 in the center of the saddle 11 and extends longitudinally through the connecting rod 7 for supplying the crankpin bearing (not shown) with lubrication oil.

The axial lubrication grooves 22 can in all of the described embodiments be replaced by a row of openings (not shown) in the bearing surface, with a an axial feed channel there below, either in the rear side of the bearing shell 12, or in the saddle 11.

The flow path from the opening of the axial bore 5 to the axial lubrication grooves 22 or the axial line of lubrication openings is thus substantially all the way extending adjacent either the bearing surface or along the rear side of either of the bearing shells. Although channel 19 is formed within the saddle this section of the flow path is still considered to be substantially adjacent the rear side of the bearing shells.

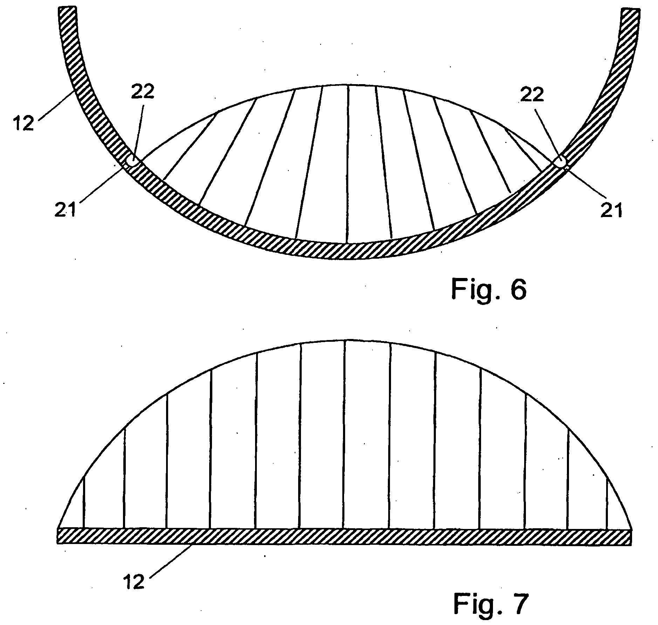

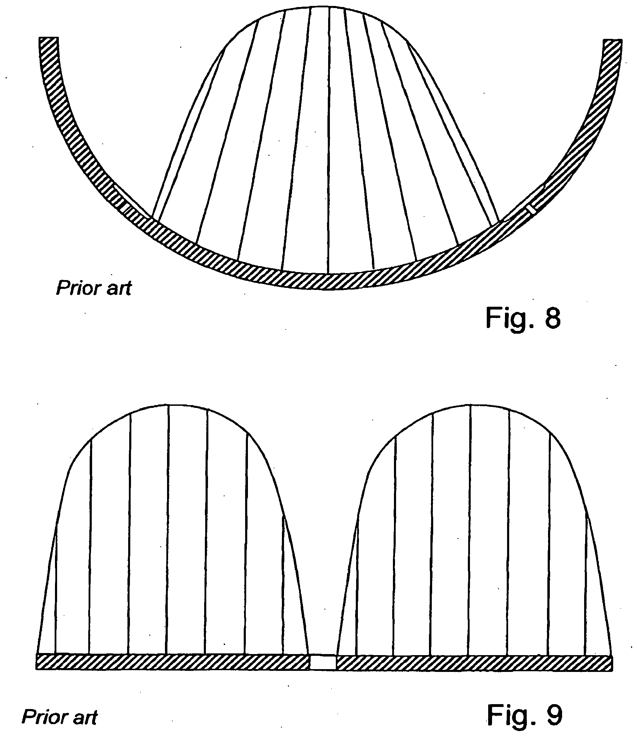

Fig. 6 shows the radial pressure distribution of the bearing oil film in a crosshead bearing according to the first embodiment which has broad base and a single peak with a relatively low maximum amplitude, whilst Fig. 8 shows the corresponding radial pressure distribution of the prior art construction with lubrication pockets with a narrower base and a significantly higher maximum amplitude.

Fig. 7 shows the axial pressure distribution of the bearing oil film which has broad base and a single peak with a relatively low maximum amplitude, whilst Fig. 9 shows the corresponding radial pressure distribution of the prior art construction with a transverse slit in the crosshead journal which has two separate peaks with a significantly higher maximum pressure.

As shows in Figs. 1 and 3, the axial lubrication grooves 22 are arranged in the border area of the heavy loaded bearing part. The angular distance of the lubrication grooves 22 can be up to 120°. This results in a crosshead bearing with an effective bearing area in the heavily loaded part of the bearing which is significantly larger than possible with crosshead bearings having lubrication pockets due to the negative dimensioning of the bearings of this type. The negative dimensioning limits the maximum radial extend of the bearing oil film in the heavily loaded part of the bearing to approximately 40°.

Fig. 10 shows a second embodiment of the crosshead bearing 1. A piston rod 2 is connected with hydraulically tightened studs (not shown) to a crosshead journal 4 provided with an axial bore 5. A one piece crosshead bearing cap 6, with an angular cut-out for the piston rod 2 is secured to a connecting rod 7 by studs and nuts 9 which are tightened by hydraulic jacks. The bearing cap 6 is provided with a thin walled upper steel shell 10, lined on the inner bearing surface with white metal. The connecting rod 7 is provided with a one-part saddle 11 that holds a thin walled lower steel shell 12, lined on the inner bearing surface with white metal. The lower shell 12 in the saddle 11 effectively acts as a one part component, but may well be formed by two or more closely stacked parts that form a continuous bearing surface, i.e. the transitions between the parts forming the shell are tight and leveled. The saddle 11 and the bearing cap 6 form together the crosshead bearing housing. The bearing surface on the lower shell 12 cooperates with the bearing surface of the upper shell 10 to form a bearing bore in which the journal 4 is received. The bearing is positively dimensioned, i.e. the radius of the crosshead journal 4 is larger than the radius of the bearing shells to allow the surface of the journal and the bearing surface of the shells to be close enough to one another for the formation of a bearing oil film around the complete circumference of the bearing. This design is also referred to as embedded arc.

The crosshead is of forged steel and is provided with cast steel guide shoes (not shown) lined with white metal on their running surface. A telescopic tube (not shown) extends from the a system oil line (not shown) at the top of the cylinder frame down towards the crosshead down towards a bracket (not shown) for oil inlet from the telescopic pipe and mounted on one of the guide shoes.

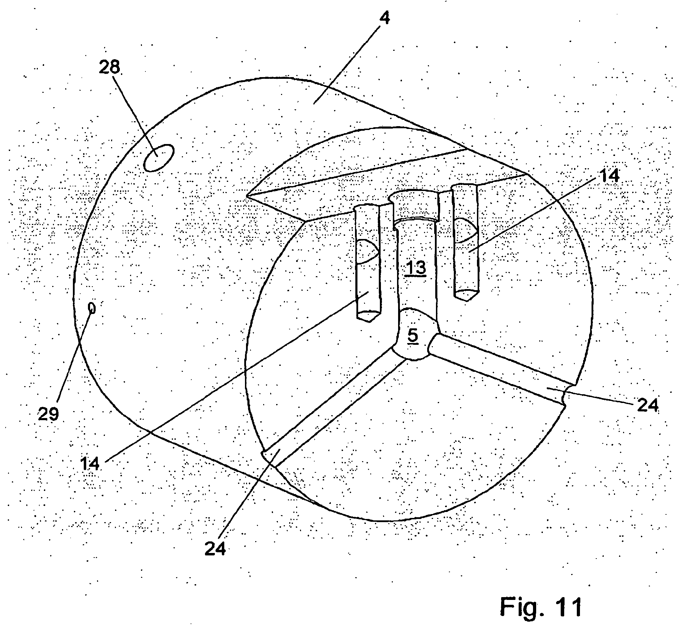

The axial bore 5 in the journal 4 is, as shown in Fig.11, connected via radial bores 28 and not shown grooves and bores in the crosshead to the telescopic tube and thus supplied lubrication oil at a relatively low pressure of about 3 Bar from the engines lubrication system (system oil). The connection between the lubrication system and the axial bore 5 does however not need to be formed by a telescopic tube, it is e.g. possible to use, a hinged tube and/or a flexible tube as well known in the art. Additional radial bores 29 provide the guide shoes with lubrication oil.

The lubrication oil flows from the axial bore 5 via an upwardly directed radial bore 13 into the hollow piston rod 2 to the piston (not shown) for cooling of the latter. The oil returning from the piston through the piston rod 2 is received in two upward bores 14. From the bores 14 the oil is led to the oil sump (not shown).

Two diagonally downward bores 24 extend from the axial bore 5 to the surface of the journal 4 associated with the lower bearing shell 12.

As shown in Fig. 12, two - axially central - circumferential slits 25 are disposed in the bearing surface of lower shell 12, one opposite to the opening of each of the radial bores 24 and receive the lubrication oil flowing out of the latter. The circumferential slits 25 extend from the upper edges of the lower bearing shell 12 downward towards a respective one of two axial lubrication grooves 22. A part of the lubrication oil flows through the circumferential slits 25 into the axial lubrication grooves 22. Alternatively, the circumferential slits 25 could be located in the saddle 11 just below the lower bearing shell, whilst the lower bearing shell would be provided with apertures (not shown) that connect the circumferential slits 25 in the saddle 11 to the diagonally downward bores 24.

A minor part of the lubrication oil flowing from the radial bores 24 into the radial slit 25 enters the axial lubrication grooves 22. Most of the oil in the lubrication grooves 22 is pressed out of its extremities received in an oil sump (not shown). Some of the lubrication oil flowing through the axial lubrication grooves 22 is pressed out transversely and assists in forming an oil film that carries the journal 4 and prevents substantially any direct contact between the journal surface and the bearing surface of the lower shell 12 and provides lubrication. Preferably, there are, as shown, two axial lubrication grooves 22, but there could be more, depending on circumstances, e.g. four, with two axial lubrication grooves intersecting with each of the circumferential slits 25.

As shown in Figs. 13 and 14, the saddle 11 is provided with an axially central circumferential groove 26 that spans the complete saddle 11. The circumferential groove 26 has a varying width and is disposed under the circumferential slit 25. The part of the circumferential groove 26 that opens to the circumferential slit 25 is wider than the radially central part. A major part of the lubrication oil flowing from the radial bores 24 into the circumferential slit 25 does not enter the lubrication grooves 22 but instead flows via the circumferential grove 26 into a large feed bore 23 that intersects with the central part of the radial groove 26 and extends longitudinally through the connecting rod 7 for supplying the crankpin bearing (not shown) with lubrication oil.

The pressure distribution profiles of the bearing oil film according to the second embodiment are substantially identical to those of the first embodiment illustrated by Figs. 6 and 8. The obtainable radial extend of the bearing oil film can in the second embodiment also reach up to 120°.

Figs. 15 and 16 illustrate a third embodiment of the invention. The third embodiment is like the first embodiment provided with upward channels 15 in the crosshead journal that lead the lubrication oil via slits 16 to axially spaced grooves 18 in the bearing cap 6. The axially spaced grooves 18 intersect - in the saddle or, as shown, in the bearing cap - with two grooves 20' disposed diagonally in the saddle 11. The grooves 20' intersect with the large feed bore 23 in the center of the saddle. The diagonal grooves 20' open to two axially spaced feed bores 21 in each axial lubrication groove 22 to supply the lower bearing surface with lubrication oil. According to another embodiment, (not shown) the axial lubrication grooves 22 can be placed in the journal 4. The axial lubrication grooves 22 in the journal could be fed via a circumferential groove extending from the opening of radial bore 24 along the bearing surface towards the axial lubrication grooves 22 in the journal 4. The circumferential groove could be received int eh journal surface or in the surface of the lower bearing shell.

For all the above described embodiments the axial lubrication grooves 22 can be replaced by a row of spaced lubrication openings (not shown) in the lower bearing shell 12. An axial groove in the rear surface of the bearing shell (not shown) could be used to supply the row of openings with lubrication oil.

Although the present invention appears to be most advantageous in a positively dimensioned bearing, it could also be used in negatively dimensioned bearings.

Although the present invention has been described in detail for purpose of illustration, it is understood that such detail is solely for that purpose, and variations can be made therein by those skilled in the art without departing from the scope of the invention.

## Claims

1. A crosshead bearing (1) for a large two-stroke engine, the bearing comprising:
a crosshead journal (4).
a bearing saddle (11) integral with a connecting rod (7).
a lower bearing shell (12) with a single bearing surface received in the bearing saddle (11),
at least two axial lubrication grooves or axial lines of lubrication openings (22) disposed in the bearing surface of the lower bearing shell (12) or in the surface of the journal (4) facing the lower bearing shell (12),
a bearing cap (6) secured to the bearing saddle (11).
the bearing being rotatable about the crosshead journal (4), the journal being formed with an axial bore (5) for communication with a supply of lubricant under pressure and formed with a least one radial bore (15) which meets the axial bore (5) and extends substantially transversely thereof to the surface of the journal associated with the bearing cap (6), and arranged to communicate, during at least some part of the pivoting movement of the connecting rod (7) in operation, with at least one flow path (16, 18, 19, 20, 20', 21) extending to the axial lubrication grooves (22) in the lower bearing shell (12).
whereby the flow path (16, 18, 19, 20, 20', 21) extends along all of its length from the opening of the radial bore (15) at the surface of the journal associated with the bearing cap to the axial lubrication grooves (22) or lines of lubrication openings substantially adjacent the bearing surface and/or substantially adjacent the rear side of either the upper or lower bearing shell.

2. A crosshead bearing according to claim 1, wherein the flow path (16, 18, 19, 20. 20', 21) comprises at least one circumferential groove (18) that extends from the bearing cap (6) into the saddle (11).

3. A crosshead bearing according to claim 2, wherein the radial bore (15) opens into the circumferential groove (18).

4. A crosshead bearing according to claim 2, wherein an upper bearing shell (10) with a partitioned bearing surface is received in the bearing cap (6), whereby the radial bore (15) opens to a circumferential slit (16) in the upper bearing shell (10), and said slit at least partially overlapping said circumferential groove (18).

5. A crosshead bearing according to claim 3 or 4, wherein the saddle (11) or the rear side of the lower bearing shell (12) is provided with two diagonally arranged grooves (20') connecting the respective diagonal groove (18) with the central bore (23) and feeding the axial lubrication grooves (22) or axial lines of lubrication openings.

6. A crosshead bearing according to claim 3 or 4, wherein either the bearing cap (6) or the saddle (11) Is provided with at least one preferably axial bore (19) that Intersects both with the circumferential groove (18) and with a circumferential groove (20) extending in the saddle (11) or in the rear side of the lower bearing shell (12) and eventually into the bearing cap (6), the circumferential groove (20) opening to at least two feed bores (21) leading to the axial lubrication grooves (22) or axial lines of lubrication openings and intersecting with a feed bore (23) extending through the connecting rod (7) for supplying a crankpin bearing with lubrication oil.

7. A crosshead bearing according to any of claims 1 to 6, wherein the bearing is negatively dimensioned.

8. A crosshead bearing according to claim 6 or 7, wherein channel 19 extends at an oblique angle from circumferential grooves (18) to circumferential groove (20).

9. A crosshead bearing (1) for a large two-stroke engine, the bearing comprising:
a crosshead journal (4),
a bearing saddle (11) integral with a connecting rod (7),
a lower bearing shell (12) with a single bearing surface received in the bearing saddle (11).
a bearing cap (6) secured to the bearing saddle (11),
the bearing being rotatable about the crosshead journal (4), the journal being formed with an axial bore (5) for communication with a supply of lubricant under pressure and formed with two radial bores (24) which meet the axial bore (5) and extend substantially transversely thereof to the surface of the journal associated with the lower bearing shell (12), and arranged to communicate, during at least some part of the pivoting movement of the connecting rod (7) in operation, with two circumferentially extending rows of bores in the lower bearing shell (12) or with two circumferential slits (25) disposed either in the lower bearing shell (12) or in the journal (4), the circumferential slits (25) being placed outside the heaviest loaded portion of the bearing shell and intersecting with at least two axial lubrication grooves (22) disposed in the bearing surface of the lower bearing shell (12) or in the surface of the journal (4) facing the lower bearing shell (12) and said axial lubrication grooves (22) being tangenially spaced from one another with the heaviest loaded portion of the bearing shell there between.

10. A crosshead bearing according to claim 9, wherein a circumferential groove (26) extending in the saddle (11) is disposed below the circumferential slits (25), the circumferential groove (26) intersects with a feed bore (23) extending longitudinally through the connecting rod (7) for supplying a crankpin bearing with lubrication oil.

11. A crosshead bearing according to claim 9 or 10, wherein the bearing is negatively dimensioned.

## Patentansprüche

1. Kreuzkopflager (1) für einen großen Zweitaktmotor, wobei das Lager umfasst:
einen Kreuzkopfzapfen (4),
einen mit einer Pleuelstange (7) einstückigen Lagersattel (11),
eine untere Lagerschale (12) mit einer einzigen Lagerfläche, die in dem Lagersattel (11) aufgenommen ist,
zumindest zwei axiale Schmierungsrillen oder axiale Reihen von Schmierungsöffnungen (22), die in der Lagerfläche der unteren Lagerschale (12) oder in der Fläche des Zapfens (4), die der unteren Lagerschale (12) zugewandt ist, angeordnet sind,
einen Lagerdeckel (6), der an dem Lagersattel (11) befestigt ist,
wobei das Lager um den Kreuzkopfzapfen (4) drehbar ist, wobei der Zapfen mit einer axialen Bohrung (5) für eine Verbindung mit einer Zufuhr von unter Druck stehendem Schmiermittel gebildet ist und mit zumindest einer radialen Bohrung (15) gebildet ist, welche die axiale Bohrung (5) trifft und sich im Wesentlichen quer von dieser zu der Fläche des Zapfens erstreckt, die dem Lagerdeckel (6) zugeordnet ist, und angeordnet ist, um im Betrieb zumindest während eines gewissen Teils der Schwenkbewegung der Pleuelstange (7) mit zumindest einem Strömungsweg (16, 18, 19, 20, 20', 21) in Verbindung zu stehen, der sich zu den axialen Schmierungsrillen (22) in der unteren Lagerschale (12) erstreckt,
wodurch sich der Strömungsweg (16, 18, 19, 20, 20', 21) entlang seiner gesamten Länge von der Öffnung der radialen Bohrung (15) an der Fläche des Zapfens, die dem Lagerdeckel zugeordnet ist, bis zu den axialen Schmierungsrillen (22) oder Reihen von Schmierungsöffnungen im Wesentlichen benachbart zu der Lagerfläche und/oder im Wesentlichen benachbart zu der Rückseite entweder der oberen oder der unteren Lagerschale erstreckt.

2. Kreuzkopflager nach Anspruch 1,
wobei der Strömungsweg (16, 18, 19, 20, 20', 21) zumindest eine Umfangsrille (18) umfasst, die sich von dem Lagerdeckel (6) in den Sattel (11) erstreckt.

3. Kreuzkopflager nach Anspruch 2,
wobei sich die radiale Bohrung (15) in die Umfangsrille (18) öffnet.

4. Kreuzkopflager nach Anspruch 2,
wobei eine obere Lagerschale (10) mit einer unterteilen Lagerfläche in dem Lagerdeckel (6) aufgenommen ist, wodurch sich die radiale Bohrung (15) zu einem Umfangsschlitz (16) in der oberen Lagerschale (10) öffnet, und wobei der Schlitz zumindest teilweise mit der Umfangsrille (18) überlappt.

5. Kreuzkopflager nach Anspruch 3 oder 4,
wobei der Sattel (11) oder die Rückseite der unteren Lagerschale (12) mit zwei diagonal angeordneten Rillen (20') versehen ist, welche die jeweilige diagonale Rille (18) mit der zentralen Bohrung (23) verbinden und die axialen Schmierungsrillen (22) oder die axialen Reihen von Schmierungsöffnungen versorgen.

6. Kreuzkopflager nach Anspruch 3 oder 4,
wobei entweder der Lagerdeckel (6) oder der Sattel (11) mit zumindest einer vorzugsweise axialen Bohrung (19) versehen ist, die sowohl die Umfangsrille (18) als auch eine Umfangsrille (20) schneidet, die sich in dem Sattel (11) oder in der Rückseite der unteren Lagerschale (12) und schließlich in den Lagerdeckel (6) erstreckt, wobei sich die Umfangsrille (20) zu zumindest zwei Versorgungsbohrungen (21) öffnet, die zu den axialen Schmierungsrillen (22) oder den axialen Reihen von Schmierungsöffnungen führen und sich mit einer Versorgungsbohrung (23) schneiden, die sich durch die Pleuelstange (7) erstreckt, um einem Kurbelstiftlager ein Schmierungsöl zuzuführen.

7. Kreuzkopflager nach einem beliebigen der Ansprüche 1 bis 6,
wobei das Lager negativ dimensioniert ist.

8. Kreuzkopflager nach Anspruch 6 oder 7, wobei sich ein Kanal (19) unter einem schiefen Winkel von der Umfangsrille (18) bis zu der Umfangsrille (20) erstreckt.

9. Kreuzkopflager (1) für einen großen Zweitaktmotor, wobei das Lager umfasst:
einen Kreuzkopfzapfen (4),
einen mit einer Pleuelstange (7) einstückigen Lagersattel (11),
eine untere Lagerschale (12) mit einer einzigen Lagerfläche, die in dem Lagersattel (11) aufgenommen ist,
einen Lagerdeckel (6), der an dem Lagersattel (11) befestigt ist,
wobei das Lager um den Kreuzkopfzapfen (4) drehbar ist, wobei der Zapfen mit einer axialen Bohrung (5) für eine Verbindung mit einer Zufuhr von unter Druck stehendem Schmiermittel gebildet ist und mit zwei radialen Bohrungen (24) gebildet ist, welche die axiale Bohrung (5) treffen und sich im Wesentlichen quer von dieser zu der Fläche des Zapfens, die der unteren Lagerschale (12) zugeordnet ist, erstrecken und angeordnet sind, um im Betrieb zumindest während eines gewissen Teils der Schwenkbewegung der Pleuelstange (7) mit zwei sich über den Umfang erstreckenden Reihen von Bohrungen in der unteren Lagerschale (12) oder mit zwei Umfangsschlitzen (25) in Verbindung zu stehen, die entweder in der unteren Lagerschale (12) oder in dem Zapfen (4) angeordnet sind, wobei die Umfangsschlitze (25) außerhalb des am stärksten belasteten Abschnitts der Lagerschale angeordnet sind und sich mit zumindest zwei axialen Schmierungsrillen (22) schneiden, die in der Lagerfläche der unteren Lagerschale (12) oder in der Fläche des Zapfens (4) angeordnet sind, die der unteren Lagerschale (12) zugewandt ist, und wobei die axialen Schmierungsrillen (22) voneinander tangential beabstandet sind, wobei sich der am stärksten belastete Abschnitt der Lagerschale dazwischen befindet.

10. Kreuzkopflager nach Anspruch 9, wobei eine Umfangsrille (26), die sich in dem Sattel (11) erstreckt, unterhalb der Umfangsschlitze (25) angeordnet ist, wobei sich die Umfangsrille (26) mit einer Versorgungsbohrung (23) schneidet, die sich in Längsrichtung durch die Pleuelstange (7) erstreckt, um einem Kurbelstiftlager ein Schmierungsöl zuzuführen.

11. Kreuzkopflager nach Anspruch 9 oder 10, wobei das Lager negativ dimensioniert ist.

## Revendications

1. Palier à crosse (1) pour gros moteur à deux temps, le palier comprenant :
un tourillon à crosse (4),
un étrier de roulement (11) intégral présentant une tige de connexion (7),
une coquille de palier inférieure (12) présentant une seule surface de palier reçue dans l'étrier de roulement (11),
au moins deux rainures de graissage axiales ou lignes axiales d'ouvertures de graissage (22) pratiquées dans la surface de palier de la coquille de palier inférieure (12) ou dans la surface du tourillon (4) en regard de la coquille de palier inférieure (12),
un chapeau de palier (6) attaché à l'étrier de roulement (11),
le palier pouvant tourner autour du tourillon à crosse (4), le tourillon étant formé d'un alésage axial (5) pour permettre la communication avec un approvisionnement de lubrifiant sous pression et formé d'au moins un alésage radial (15) qui rejoint l'alésage axial (5) et s'étend sensiblement transversalement à celui-ci vers la surface du tourillon associé au chapeau de palier (6), et agencé pour communiquer, durant au moins une certaine partie du mouvement de pivot de la tige de connexion (7) en fonctionnement, avec au moins une voie de passage (16, 18, 19, 20, 20', 21) s'étendant vers les rainures de graissage axiales (22) dans la coquille de palier inférieure (12),
dans lequel la voie de passage (16, 18, 19, 20, 20', 21) s'étend sur toute sa longueur depuis l'ouverture de l'alésage radial (15) à la surface du tourillon associé au chapeau de palier vers les rainures de graissage axiales (22) ou les lignes des ouvertures de graissage sensiblement adjacentes à la surface du palier et/ou sensiblement adjacentes au côté arrière de la coquille de palier supérieure ou inférieure.

2. Palier à crosse selon la revendication 1, dans lequel la voie de passage (16, 18, 19, 20, 20', 21) comprend au moins une rainure périphérique (18) qui s'étend depuis le chapeau de palier (6) jusque dans l'étrier (11).

3. Palier à crosse selon la revendication 2, dans lequel l'alésage radial (15) débouche dans la rainure périphérique (18).

4. Palier à crosse selon la revendication 2, dans lequel une coquille de palier supérieure (10) présentant une surface de palier cloisonnée est reçue dans le chapeau de palier (6), et dans lequel l'alésage radial (15) débouche vers une fente périphérique (16) dans la coquille supérieure de palier (10), et la fente chevauchant au moins partiellement la rainure périphérique (18).

5. Palier à crosse selon la revendication 3 ou 4, dans lequel l'étrier (11) ou le côté arrière de la coquille de palier inférieure (12) présente deux rainures agencées en diagonale (20') connectant la rainure diagonale respective (18) et l'alésage central (23) et alimentant les rainures de graissage axiales (22) ou les lignes axiales des ouvertures de graissage.

6. Palier à crosse selon la revendication 3 ou 4, dans lequel le chapeau de palier (6) ou l'étrier (11) présente au moins un alésage (19) axial de préférence qui croise à la fois la rainure périphérique (18) et une rainure périphérique (20) s'étendant dans l'étrier (11) ou dans le côté arrière de la coquille de palier inférieure (12), puis dans le chapeau de palier (6), la rainure périphérique (20) débouchant sur au moins deux alésages d'alimentation (21) conduisant aux rainures de graissage axiales (22) ou aux lignes axiales des ouvertures de graissage et croisant un alésage d'alimentation (23) s'étendant dans la tige de connexion (7) pour approvisionner une flasque à manetons en huile de graissage.

7. Palier à crosse selon l'une quelconque des revendications 1 à 6, dans lequel le palier est dimensionné négativement.

8. Palier à crosse selon revendication 6 ou 7, dans lequel un canal 19 s'étend à angle droit depuis les rainures périphériques (18) vers la rainure périphérique (20).

9. Palier à crosse (1) pour gros moteur à deux temps, le palier comprenant :
un tourillon à crosse (4),
un étrier de roulement (11) intégral présentant une tige de connexion (7),
une coquille de palier inférieure (12) présentant une seule surface de palier reçue dans l'étrier de roulement (11),
un chapeau de palier (6) attaché à l'étrier de roulement (11),
le palier pouvant tourner autour du tourillon à crosse (4), le tourillon étant formé d'un alésage axial (5) pour permettre la communication avec un approvisionnement de lubrifiant sous pression et formé de deux alésages radiaux (24) qui rejoignent l'alésage axial (5) et s'étendent sensiblement transversalement à celui-ci vers la surface du tourillon associé à la coquille de palier inférieure (12), et agencé pour communiquer, durant au moins une certaine partie du mouvement de pivot de la tige de connexion (7) en fonctionnement, avec deux rangées d'alésages s'étendant de manière périphérique dans la coquille de palier inférieure (12) ou avec deux fentes périphériques (25) agencées soit dans la coquille de palier inférieure (12), soit dans le tourillon (4), les fentes périphériques (25) étant placées à l'extérieur de la portion la plus chargée de la coquille de palier et croisant au moins deux rainures de graissage axiales (22) pratiquées dans la surface de palier de la coquille de palier inférieure (12) ou dans la surface du tourillon (4) en regard de la coquille de palier inférieure (12) et les rainures de graissage axiales (22) étant tangentiellement espacées les unes des autres par la portion la plus chargée de la coquille de palier.

10. Palier à crosse selon la revendication 9, dans lequel une rainure périphérique (26) s'étendant dans l'étrier (11) est pratiquée sous les fentes périphériques (25), la rainure périphérique (26) croise un alésage d'alimentation (23) s'étendant longitudinalement par la tige de connexion (7) pour approvisionner une flasque à manetons en huile de graissage.

11. Palier à crosse selon la revendication 9 ou 10, dans lequel le palier est dimensionné négativement.
